Europäisches Patentamt

European Patent Office

Office européen des brevets

(11) Numéro de publication : **0 519 811 A1**

# (12) DEMANDE DE BREVET EUROPEEN

(21) Numéro de dépôt : **92401680.1**

(22) Date de dépôt : **17.06.92**

(51) Int. Cl.$^5$ : **G05G 7/02,** G05G 1/04, F16C 1/10, F16C 1/12

(30) Priorité : **19.06.91 FR 9107530**

(43) Date de publication de la demande :
**23.12.92 Bulletin 92/52**

(84) Etats contractants désignés :
**AT BE CH DE DK ES GB GR IT LI LU MC NL PT SE**

(71) Demandeur : **TELECOMMANDES MECANIQUES PAR CABLE T.M.C.**
**Rue Jean-Baptiste Colbert, Z.A. des Courtilleraies**
**F-77350 Le Mee sur Seine (FR)**

(72) Inventeur : **Bignon, Daniel-Pierre**
**8, Allée des Feuillantines**
**F-94800 Villejuif (FR)**

(74) Mandataire : **Thibon-Littaye, Annick**
**Cabinet A. THIBON-LITTAYE 11 rue de l'Etang**
**F-78160 Marly-le-Roi (FR)**

(54) **Boîtier de commande de câble.**

(57)    Boîtier de commande de câble caractérisé en ce qu'il comporte un levier vertical (14) raccordé à un câble (6) par l'intermédiaire de moyens d'articulation intermédiaires internes au boîtier conçus et conformés de sorte à assurer la commande en traction ou en compression dudit câble (6), entrant dans le boîtier à l'horizontale ou à la verticale, par ledit levier (14) de commande manuelle verticale.

FIG.1

Jouve, 18, rue Saint-Denis, 75001 PARIS

La présente invention concerne un boîtier de commande de câble et en particulier son utilisation pour la commande de distributeurs hydrauliques.

L'invention s'applique notamment dans le secteur des matériels agricoles et de travaux publics.

Il est connu dans les matériels agricoles et de travaux publics d'avoir des boîtiers de commande à sortie du boîtier (ou entrée dans le boîtier) horizontale du câble nécessitant un levier coudé.

Toutefois, ce type de boîtier ne permet pas de s'adapter aux sorties horizontales et aux sorties verticales du câble.

On connaît par exemple des documents EP-A-0 414 603 et EP-A-0 285 299 des dispositif de manoeuvre pour système de commande à câble sous gaine dans lesquels la sortie du câble du boîtier s'effectue à l'horizontale avec un levier de commande horizontal pour l'un et incliné pour l'autre. Il est impossible avec ces dispositifs, compte-tenu des moyens d'articulations prévus, d'obtenir une commande manuelle verticale d'un câble entrant à la verticale dans le boîtier.

On connaît également du document US-A-3 541 877 un dispositif à levier vertical de commande d'un ou plusieurs câbles sortant du boîtier à la verticale. Mais il est impossible avec ce dispositif, toujours compte-tenu des moyens d'articulation prévus, d'obtenir une commande manuelle verticale d'un câble entrant à l'horizontale dans le boîtier.

Un premier but de l'invention est donc de proposer un boîtier de commande à sortie verticale ou horizontale.

Ce but est atteint par le fait que le boîtier de commande de câble comporte un levier vertical raccordé à un câble par l'intermédiaire de moyens d'articulation intermédiaires internes au boîtier conçus et conformés de sorte à assurer la commande en traction ou en compression dudit câble, entrant dans le boîtier à l'horizontale ou à la verticale, par ledit levier de commande manuelle verticale.

Selon une caractéristique particulièrement avantageuse du boîtier selon l'invention, lesdits moyens d'articulation intermédiaires comportent une roue porte-chape à deux bras disposés perpendiculairement entre eux et dont un premier bras est, au repos, dans le prolongement ou dans un plan parallèle à l'axe dudit levier de commande, ladite roue porte-chape étant montée pivotante dans le boîtier, à l'intersection desdits bras, autour d'un axe de rotation et agissant par un desdits bras sur une extrémité dudit câble monté entre des oreilles ménagées dans une extrémité dudit bras distale dudit axe de rotation.

Au moyen d'une telle roue porte-chape, on autorise le montage du boîtier de commande pour obtenir soit une sortie de câble verticale, soit une sortie de câble horizontale.

A cet effet, ladite extrémité du câble est avantageusement montée sur ledit premier bras de sorte à assurer la commande dudit câble entrant dans le boîtier à l'horizontale; ou ladite extrémité du câble est avantageusement montée sur un second bras, perpendiculaire audit premier bras, de sorte à assurer la commande dudit câble entrant dans le boîtier à la verticale.

Selon une autre particularité, la roue porte-chape comporte un doigt perpendiculaire à l'axe du levier et parallèle à l'axe de rotation de la roue sur le boîtier et soumis à l'action d'un ressort de rappel cylindrique à deux doigts monté dans le boîtier.

Selon une autre particularité, la roue porte-chape comporte dans le prolongement dudit second bras, perpendiculaire audit premier bras disposé dans le prolongement du levier, une encoche pour point neutre.

Selon une autre particularité, ledit boîtier de commande comporte un guide-câble terminé par un étrier de raccord de gaine monté sur une découpe dudit boîtier, dans l'angle du boîtier situé en vis-à-vis de l'angle formé par les deux bras de la roue porte-chape.

Selon une autre particularité, ledit guide-câble comporte une partie tubulaire reliée par un cône audit étrier à section en forme de U dont les joues latérales ont une forme complémentaire à la découpe du boîtier, l'axe de symétrie des joues latérales étant orienté à 45 degrés par rapport à l'axe de symétrie de la partie tubulaire.

Selon une autre particularité, les joues de l'étrier et le boîtier comportent des moyens de fixation de façon à assurer la réversibilité de la position de montage dudit guide-câble pour permettre d'avoir la sortie tubulaire soit en position horizontale, soit en position verticale.

Selon une autre particularité, ledit second bras perpendiculaire audit premier bras situé, au repos, dans le prolongement du levier comporte à son extrémité éloignée de l'axe de pivotement un bossage permettant de recevoir l'extrémité d'une bielle de commande reliée à l'extrémité du levier par une pièce de liaison.

Selon une autre particularité, la pièce de liaison comporte un étrier permettant la liaison avec une bielle de liaison au boîtier, deux axes horizontaux disposés de part et d'autre de l'étrier pour recevoir chacun une bielle de commande, chacune d'une roue porte-chape et un orifice permettant la fixation du levier.

Selon une autre particularité, chaque roue porte-chape est montée dans un boîtier indépendant rendu solidaire de l'autre et comportant des moyens pour former un logement de fixation d'une bielle de liaison avec la pièce de liaison.

Selon une autre particularité, chaque bielle de commande est réglable dans sa longueur.

Selon une autre particularité, chaque bielle de commande est constituée d'une première partie filetée pénétrant dans une deuxième partie taraudée, chaque partie comportant à son extrémité opposée un moyen de fixation sur un axe.

Selon une autre particularité, le boîtier de commande comporte les moyens de solidarisation du levier avec la roue porte-chape constitués par un logement ménagé dans ladite roue et situé, au repos, dans le prolongement dudit levier et d'un moyen de fixation dudit levier dans ledit logement.

Selon une autre particularité, le boîtier de commande comporte des moyens de solidarisation du levier avec la pièce de liaison constitués par un logement ménagé dans ladite pièce de liaison de la dimension du levier et situé, au repos, dans le prolongement dudit levier et d'un moyen de fixation dudit levier dans ledit logement.

Selon une autre particularité, ledit moyen de fixation est constitué d'une vis de serrage disposée dans un trou taraudé perpendiculaire à l'axe dudit logement.

Un autre but de l'invention est de proposer une application de ce boîtier.

Ce but est atteint par le fait que le boîtier de commande selon l'invention est appliqué à la commande des distributeurs hydrauliques pour les matériels agricoles et de travaux publics.

D'autres caractéristiques et avantages de la présente invention apparaîtront plus clairement à la lecture de la description ci-après faite en référence aux dessins annexés dans lesquels :

- la figure 1 représente une vue de côté en coupe partielle d'un boîtier de commande selon l'invention pourvu de sa manette et de son levier ;
- la figure 2 représente une vue de coté de l'extérieur du boîtier représenté à la figure 1 ;
- la figure 3 représente une vue de face et en coupe partielle du boîtier représenté à la figure 1 avec en détail une vue latérale en coupe ;
- la figure 4A représente une vue latérale et en coupe partielle d'une pièce de raccord de câble selon l'invention ;
- la figure 4B représente une vue partielle de dessus de la pièce de raccord de câble représentée à la figure 4A ;
- la figure 5A représente une vue de côté d'une roue porte-chape selon l'invention ;
- la figure 5B représente une vue de dessus de la roue porte-chape représentée à la figure 5A ;
- la figure 6 représente une vue de face et en coupe partielle d'un deuxième mode de réalisation d'un boîtier de commande à deux sorties de câble selon l'invention ; et
- la figure 7 représente une vue de côté en coupe partielle du boîtier à double sortie de câble représenté à la figure 6.

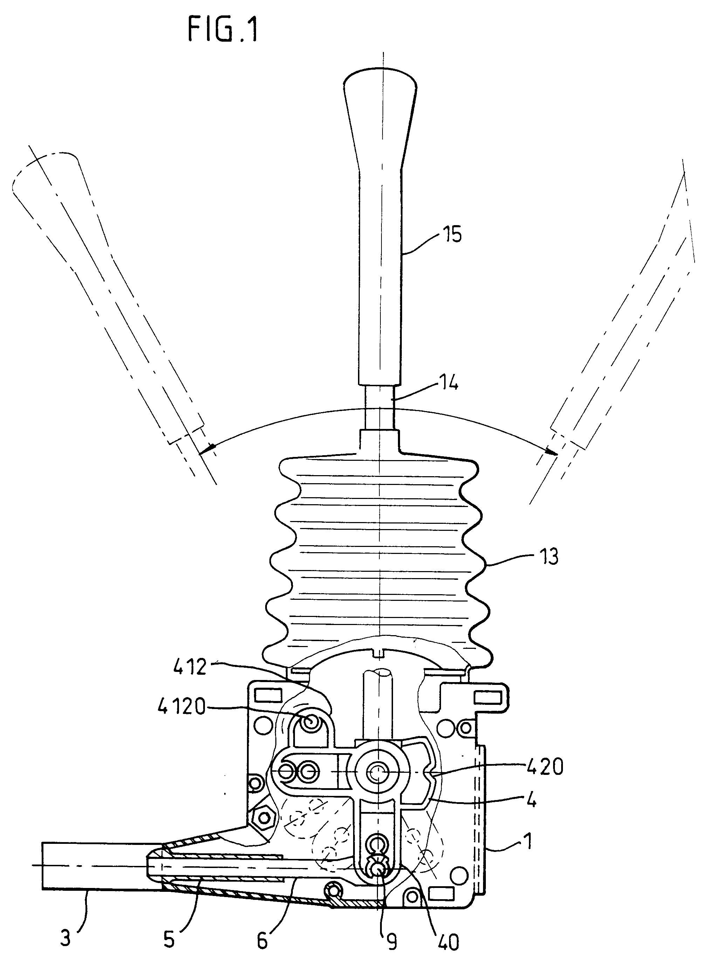

Le dispositif de l'invention représenté à la figure 1 forme un boîtier de commande à sortie horizontale commandé par une manette verticale 15 agissant, par l'intermédiaire d'un levier 14 sur une roue porte-chape 4 disposée dans un boîtier 1.

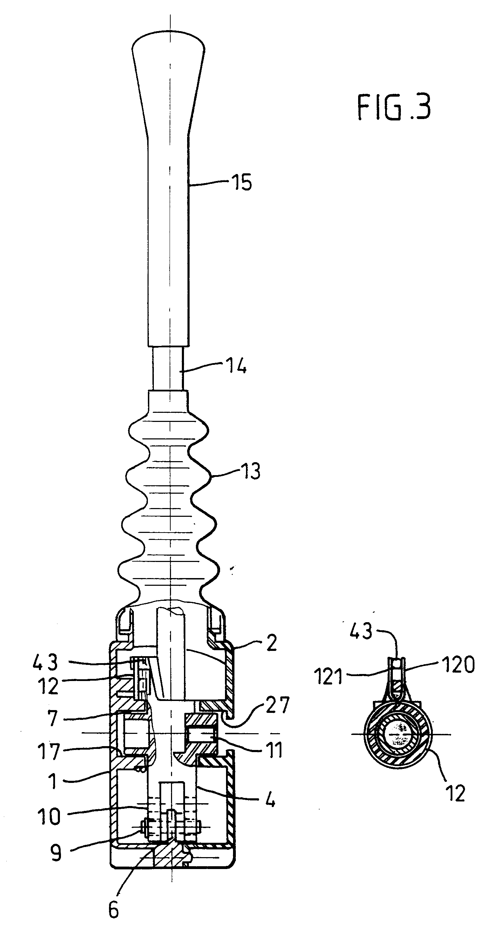

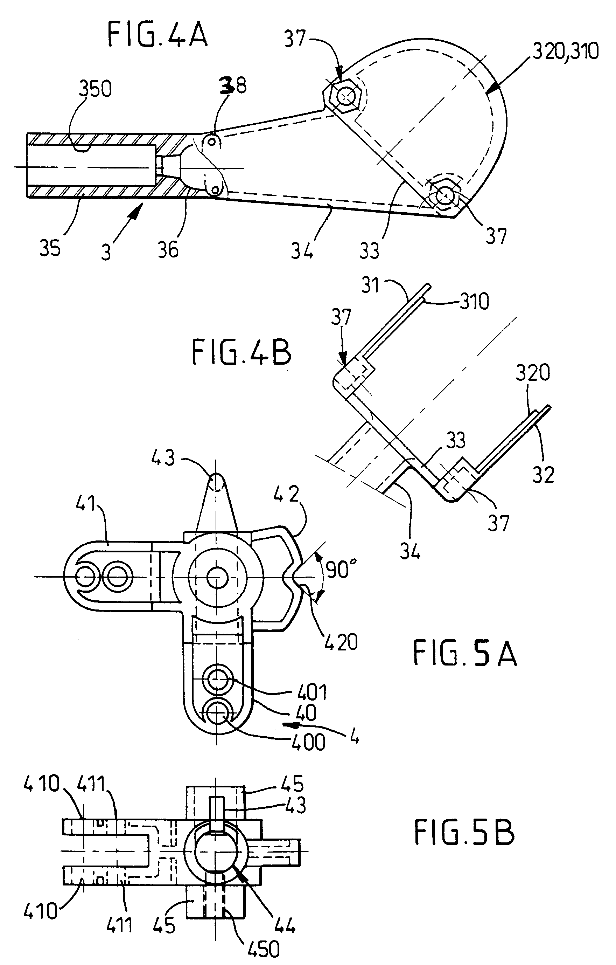

Cette roue porte-chape 4 s'articule autour d'un logement 17 (figure 3) prévu dans le boîtier 1 grâce à des tétons cylindriques 45 (figure 5B), prévus de part et d'autre de l'élément de la roue porte-chape 4. Un trou taraudé 450 est prévu dans un des tétons et débouche à proximité du centre le la roue porte-chape 4 dans un logement vertical 44 destiné à recevoir l'extrémité du levier de commande 14. La vis qui se monte ainsi dans le trou taraudé 450 permet une fixation du levier dans son logement 44.

La roue porte-chape comporte, comme représenté à la figure 5A, un bras vertical 40 qui se trouve dans le prolongement de l'axe du levier 14 et un bras horizontal 41 qui est perpendiculaire au bras vertical 40. Le bras vertical 40 se prolonge de l'autre côté de l'axe de pivotement de la roue porte-chape par un doigt 43 disposé parallèlement à l'axe du levier 14. De l'autre côté de l'axe de symétrie, par rapport au bras horizontal 41 se trouve un prolongement 42 formant une excroissance dans laquelle une encoche 420 formant un angle de 90 degrés sert de cran de point neutre. Dans ce logement 420 vient se loger une bille montée sur un ressort disposé dans un logement du boîtier 1 et permettant de positionner correctement au point neutre la roue porte-chape.

Chaque bras 41, 40 est constitué à son extrémité par un étrier à deux branches dans chacune desquelles sont percés des orifices 410, 411, 400, 401 espacés longitudinalement dans le sens de l'axe de symétrie du bras. Dans la représentation des figures, c'est entre les jambes de l'étrier de la branche 40 que vient se loger l'extrémité d'un câble 6 pourvu d'un orifice dans lequel passe un axe 9 qui permet de solidariser le câble 6 à la branche 40 de la roue porte-chape 4. De façon connue, l'axe 9 est rendu solidaire par des bagues d'arrêt 10 (figure 3). Une telle disposition assure la sortie du câble à l'horizontale. Pour une sortie du câble à la verticale, c'est entre les jambes de l'étrier de la branche 41 que vient se loger l'extrémité du câble.

Le câble 6 est revêtu d'une gaine rotule 5 qui vient se fixer dans un logement sphérique 36 (figure 4A) disposé dans un élément guide-câble 3 relié au boîtier par un raccord.

Le boîtier est constitué par deux demi-boîtiers 1, 2 (figure 3) rendus solidaires entre eux au moyen de vis et comportant dans l'axe inférieur disposé en vis-à-vis de l'angle formé par les deux bras de la roue porte-chape 4, une découpe arrondie correspondant au raccord prolongeant le guide-câble 3.

Le guide-câble 3 (figure 4A) est formé d'une partie cylindrique 35 pourvue d'un alésage 350 débouchant par un orifice dans la partie sphérique 36 constituant le logement de la rotule du câble. Cette partie sphérique 36 est pourvue de perçages 38 permettant la fixation de la rotule à l'aide de goupilles. L'élément guide-câble se prolonge par une partie conique 34 qui se raccorde à la pièce de raccord à section en forme de U.

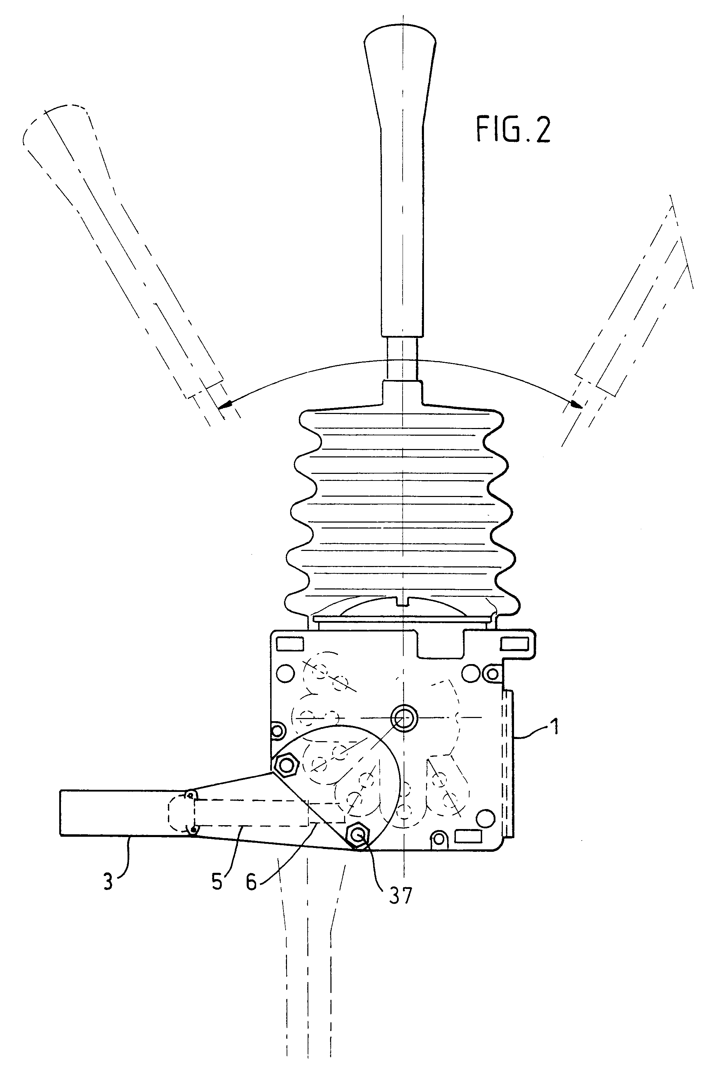

Cette pièce de raccord est constituée par une partie centrale 33 débouchant par un orifice dans la partie conique 34 et des jambes latérales 31, 32 (figure 5B) constituant des joues à forme circulaire. Chacune des joues 31, 32 est pourvue d'un épaulement 310, 320 à l'intérieur qui vient s'appuyer sur des épaulement complémentaires prévus dans la découpe du boîtier (figure 2). La partie des flancs de la pièce en U située à proximité de la partie centrale 33 comporte également des bossages 37 permettant le logement de la tête d'écrou ou de vis de fixation de l'élément guide-câble 3 sur l'angle du boîtier 1.

Une partie cylindrique 7 (figure 3) du boîtier concentrique au logement 17 de rotation de l'élément porte-chape 4 permet de recevoir un ressort cylindrique 12 dont les extrémités 120, 121 (détail de la figure 3) viennent se placer de part et d'autre du doigt 43 de la roue porte-chape 4 pour ramener celle-ci vers sa position d'équilibre.

L'ensemble du boîtier de commande est protégé des poussières par un soufflet 13 monté sur l'extrémité du boîtier et sur le levier 14.

La figure 2 montre une variante d'utilisation du dispositif dans lequel l'élément de raccord peut être disposé avec une sortie verticale, comme représenté par la ligne pointillée. Dans ce cas, les flancs 31, 32 de la partie de portion de raccord 31 à 33 sont retournés de façon à ce que la partie centrale 33 qui se raccorde avec l'axe de la partie tubulaire 35 selon un angle de 45 degrés se trouve disposée selon la même direction par rapport au boîtier, ce qui a pour conséquence de positionner l'axe de symétrie de la partie tubulaire 35 selon une direction orthogonale à la direction horizontale.

Dans une variante de réalisation, représentée par l'élément porte-chape de la figure 1, cet élément comporte sur le bras 41 disposé horizontalement un bossage 412 pourvu d'un orifice 4120 dont la fonction sera explicitée en liaison avec le deuxième mode de réalisation de l'invention qui concerne un boîtier à double commande.

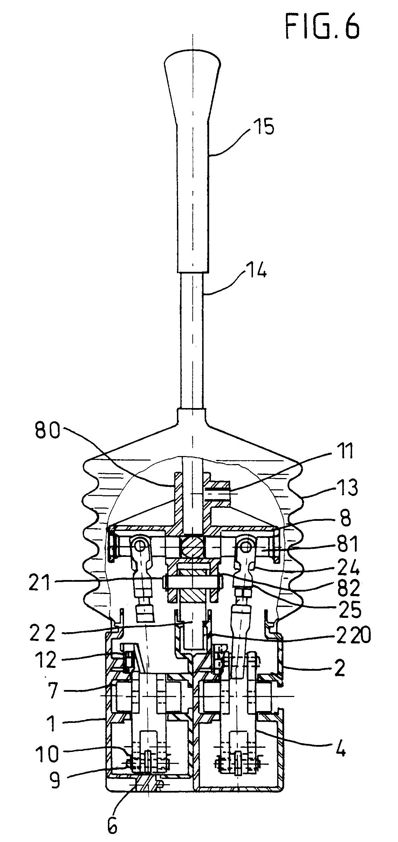

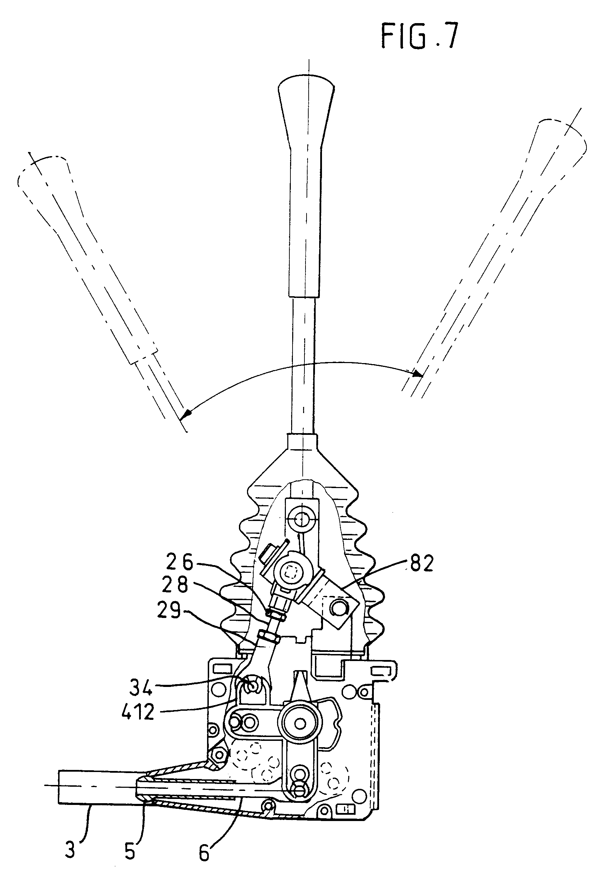

Les figures 6 et 7 ont conservé pour les éléments identiques les mêmes références et on se bornera à décrire simplement les éléments additionnels.

Le dispositif à double commande est constitué par l'association de deux boîtiers rendus solidaires entre eux et comportant chacun une roue porte-chape 4 et un élément guide-câble 3. La forme extérieure des deux boîtiers permet par leur association de constituer un logement 220 (figure 6) pour un bras 22 à l'extrémité duquel une pièce 8 formant rotule est articulée sur un axe 21. Cette pièce 8 formant rotule comporte un prolongement en forme de chape 82 qui s'articule sur l'axe 21 disposé selon une direction perpendiculaire à l'axe de symétrie du bras 22 et parallèle aux axes de rotation des roues porte-chape, la pièce 8 en forme de rotule comporte des logements pour deux axes d'articulation 81 de deux bielles de commande 24, 25, 28, 26, 29 disposées de part et d'autre du bras 22 et venant s'articuler sur le bossage 412 de chacune des roues porte-chape 4 par un axe 34.

Chaque bielle est constituée d'une partie d'articulation sur chaque axe 81, d'un prolongement 25 comportant une partie filetée 28 (figure 7) qui vient s'engager dans un deuxième demi-élément 29 complétant la bielle, pourvu lui d'un orifice taraudé. La longueur de la bielle est réglée au moyen de la partie filetée 28 en vissant plus ou moins celle-ci et en venant bloquer cette longueur par un contre-écrou 26. L'élément de rotule comporte selon un plan perpendiculaire au plan d'articulation des bielles, un logement 80 pourvu latéralement d'un perçage permettant de recevoir une vis 11. Ce logement 80 reçoit l'extrémité du levier 14 qui se trouve fixée dans ce logement à l'aide de la vis 11.

Ce dispositif à double commande conserve pour chaque commande les particularités du dispositif décrit à l'appui des figures 1 à 5, ce qui permet notamment de commander simultanément deux cables qui peuvent être l'un horizontal et l'autre vertical.

Le dispositif ainsi obtenu permet, par le basculement du levier 14 à l'aide de la manette 15 de commander le déplacement du câble 6, soit en traction, soit en compression, et ceci, que la sortie soit horizontale ou verticale. Le câble 6 est relié à un distributeur hydraulique utilisé sur les machines agricoles ou les machines de chantier.

D'autres modifications à la portée de l'homme de métier font également partie de l'esprit de l'invention.

**Revendications**

**1/** Boîtier de commande de câble caractérisé en ce qu'il comporte un levier vertical (14) raccordé à un câble (6) par l'intermédiaire de moyens d'articulation intermédiaires internes au boîtier conçus et conformés de sorte à assurer la commande en traction ou en compression dudit câble (6), entrant dans le boîtier à l'horizontale ou à la verticale, par ledit levier (14) de commande manuelle verticale.

**2/** Boîtier de commande selon la revendication 1, caractérisé en ce que lesdits moyens d'articulation intermédiaires comportent une roue porte-chape (4) à deux bras (40, 41) disposés perpendiculairement entre eux et dont un premier bras (40) est, au repos, dans le prolongement ou dans un plan parallèle à l'axe dudit levier (14) de commande, ladite roue porte-chape (4) étant montée pivotante dans le boîtier, à l'intersection desdits bras, autour d'un axe de rotation (45) et agissant par un desdits bras (40, 41) sur une extrémité dudit câble (6) monté entre des oreilles ménagées dans une extrémité dudit bras (40, 41) distale dudit axe de rotation (45).

3/ Boîtier de commande selon la revendication 2, caractérisé en ce que ladite extrémité du câble (6) est montée sur ledit premier bras (40) de sorte à assurer la commande dudit câble (6) entrant dans le boîtier à l'horizontale.

4/ Boîtier de commande selon la revendication 2, caractérisé en ce que ladite extrémité du câble (6) est montée sur un second bras (41), perpendiculaire audit premier bras (40), de sorte à assurer la commande dudit câble (6) entrant dans le boîtier à la verticale.

5/ Boîtier de commande selon l'une quelconque des revendications 2 à 4, caractérisé en ce que ladite roue porte-chape (4) comporte un doigt (43), perpendiculaire à l'axe dudit levier (14) et parallèle audit axe de rotation (45) de la roue sur le boîtier, soumis à l'action d'un ressort de rappel (12) cylindrique à deux doigts (120, 121) monté dans le boîtier.

6/ Boîtier de commande selon l'une quelconque des revendications 2 à 5, caractérisé en ce que ladite roue porte-chape (4) comporte, dans un prolongement (42) dudit second bras (41) perpendiculaire audit premier bras (40), une encoche (420) pour point neutre.

7/ Boîtier de commande selon l'une quelconque des revendications 1 à 6, caractérisé en ce qu'il comporte un guide-câble (3) terminé par un étrier (31 à 33) de raccord de gaine monté sur une découpe dudit boîtier, dans l'angle du boîtier situé en vis-à-vis de l'angle formé par les deux bras (40, 41) de la roue porte-chape (4).

8/ Boîtier de commande selon la revendication 7, caractérisé en ce que ledit guide-câble (3) comporte une partie tubulaire (35) reliée par un cône (34) audit étrier (31 à 33) à section en forme de U dont les joues latérales (31, 32) ont une forme complémentaire à la découpe du boîtier, l'axe de symétrie des joues latérales (31, 32) étant orienté à 45 degrés par rapport à l'axe de symétrie de la partie tubulaire (35).

9/ Boîtier de commande selon la revendication 8, caractérisé en ce que les joues de l'étrier (31, 32) et le boîtier comportent des moyens de fixation (37) de façon à assurer la réversibilité de la position de montage dudit guide-câble (3) pour permettre d'avoir la sortie tubulaire (35) soit en position horizontale, soit en position verticale.

10/ Boîtier de commande selon l'une quelconque des revendications 2 à 9, caractérisé en ce que ledit second bras (41) perpendiculaire audit premier bras (40) situé dans le prolongement du levier (14) comporte à son extrémité éloignée de l'axe de pivotement un bossage (412) permettant de recevoir l'extrémité d'une bielle (24 à 29) de commande reliée à l'extrémité dudit levier (14) par une pièce de liaison (8).

11/ Boîtier de commande selon la revendication 10, caractérisé en ce que ladite pièce de liaison (8) comporte un étrier (82) permettant la liaison avec une bielle de liaison au boîtier, deux axes horizontaux (81) disposés de part et d'autre de l'étrier (82) pour recevoir chacun une bielle de commande (24 à 29), chacune d'une roue porte-chape (4) et un orifice (80) permettant la fixation dudit levier (14).

12/ Boîtier de commande selon la revendication 10, caractérisé en ce que chaque roue porte-chape (4) est montée dans un boîtier indépendant rendu solidaire de l'autre et comportant des moyens pour former un logement (220) de fixation d'une bielle de liaison (22) avec ladite pièce de liaison (8).

13/ Boîtier de commande selon l'une quelconque des revendications 10 à 12, caractérisé en ce que chaque bielle de commande est réglable dans sa longueur.

14/ Boîtier de commande selon l'une quelconque des revendications 10 à 13, caractérisé en ce que chaque bielle de commande est constituée d'une première partie filetée (25, 28) pénétrant dans une deuxième partie taraudée (29), chaque partie comportant à son extrémité opposée un moyen de fixation sur un axe.

15/ Boîtier de commande selon l'une quelconque des revendications 2 à 9, caractérisé en ce qu'il comporte les moyens de solidarisation du levier (14) avec la roue porte-chape (4) constitués par un logement (44) ménagé dans ladite roue (4) et situé, au repos, dans le prolongement dudit levier (14) et d'un moyen de fixation (450, 11) dudit levier (14) dans ledit logement (44).

16/ Boîtier de commande selon l'une quelconque des revendications 10 à 14, caractérisé en ce qu'il comporte des moyens de solidarisation du levier (14) avec la pièce de liaison (8) constitués par un logement (80) ménagé dans ladite pièce de liaison (8) de la dimension du levier et situé, au repos, dans le prolongement dudit levier (14) et d'un moyen de fixation (450, 11) dudit levier (14) dans ledit logement (80).

17/ Boîtier de commande selon la revendication 15 ou 16, caractérisé en ce que ledit moyen de fixation est constitué d'une vis de serrage (11) disposée dans un trou taraudé (450) perpendiculaire à l'axe dudit logement (40, 80).

18/ Application du boîtier de commande de l'invention selon l'une quelconque des revendications 1 à 17, caractérisé en ce qu'il est appliqué à la commande des distributeurs hydrauliques pour les matériels agricoles et de travaux publics.

# FIG.1

FIG.2

FIG.3

FIG.4A

FIG.4B

FIG.5A

FIG.5B

FIG.6

FIG.7

26
28
29

82

34
412

3    5    6

EP 0 519 811 A1

Office européen
des brevets

**RAPPORT DE RECHERCHE EUROPEENNE**

Numero de la demande

EP    92 40 1680

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 414 603 (CONSTRUCTIONS BREVETEES D'ALFORTVILLE) | 1 | G05G7/02 |
| A | * abrégé; figure 1 * | 15 | G05G1/04 |
|  | --- |  | F16C1/10 |
| X | EP-A-0 285 299 (MORSE) | 1 | F16C1/12 |
| A | * abrégé; figure 2 * | 2-3,15, 18 |  |
|  | --- |  |  |
| X | US-A-3 541 877 (HOUK) | 1 |  |
| A | * colonne 4, ligne 3 - ligne 17 * | 2,4,15, 18 |  |
|  | * colonne 5, ligne 20 - ligne 23; figure 3 * |  |  |
|  | --- |  |  |
| A | US-A-3 976 211 (BARON) | 1-2 |  |
|  | * colonne 4, ligne 28 - ligne 33 * |  |  |
|  | * colonne 5, ligne 51 - ligne 64; figure 1 * |  |  |
|  | ----- |  |  |

**DOMAINES TECHNIQUES RECHERCHES (Int. Cl.5)**

G05G
F16C
E02F
F15C

Le présent rapport a été établi pour toutes les revendications

| Lieu de la recherche | Date d'achèvement de la recherche | Examinateur |
|---|---|---|
| LA HAYE | 19 AOUT 1992 | FLODSTROEM J.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P0402)

12